Europäisches Patentamt

European Patent Office

Office européen des brevets

(19)

(11) Publication number: **0 049 949**
**B1**

# EUROPEAN PATENT SPECIFICATION

(12)

(45) Date of publication of patent specification: **18.12.85**

(51) Int. Cl.⁴: **G 08 G 1/01**

(21) Application number: **81304129.0**

(22) Date of filing: **09.09.81**

(54) **Apparatus for detecting a ferromagnetic material.**

(30) Priority: **15.10.80 US 197173**

(43) Date of publication of application:
**21.04.82 Bulletin 82/16**

(45) Publication of the grant of the patent:
**18.12.85 Bulletin 85/51**

(84) Designated Contracting States:
**DE FR GB IT SE**

(56) References cited:
**GB-A- 647 403**
**US-A-3 249 915**
**US-A-3 319 161**
**US-A-3 651 452**
**US-A-3 825 889**
**US-A-3 984 764**
**US-A-3 989 932**

(73) Proprietor: **MINNESOTA MINING AND
MANUFACTURING COMPANY
3M Center, P.O. Box 33427
St. Paul, MN 55133 (US)**

(72) Inventor: **Koerner, Ralph J.
21609 Parthenia
Canoga Park California 91304 (US)**

(74) Representative: **Baillie, Iain Cameron et al
c/o Ladas & Parry Isartorplatz 5
D-8000 München 2 (DE)**

Courier Press, Leamington Spa, England.

## Description

### Technical Field

The present invention relates generally to ferromagnetic material detectors and more particularly to ferromagnetic material detectors which operate due to changes in impedance and still more particularly which operate due to changes in inductance. The change in impedance or inductance is converted to a change in frequency of oscillation of a resonant circuit.

### Background Art

It is desirable to detect the presence or passage of ferromagnetic materials in or through a surveillance area. One example of a ferromagnetic material which is intended to be detected is the presence or passage of vehicles in a traffic roadway. It is generally desirable to detect such vehicles to control traffic actuated signals, to count the number of vehicles passing a given point in a roadway or to detect the movement of vehicles along a surveillance area on a roadway. A second example of ferromagnetic materials which may be detected are metal objects at security checkpoints. Notable examples of this detector are airport security screens in which boarding passengers to commercial airline flights are searched for metal objects, which may include firearms or knives or other weapons.

One means of detecting the presence or passage of metallic ferromagnetic materials relative to a surveillance area is through the use of inductive loops. Such inductive loops are widely used in traffic control situations. Typically a loop of wire is buried in the roadway in proximity to a surveillance area. Typically this loop is approximately six feet (1.83 meters) by six feet (1.83 meters) square and contains approximately three turns. The loop thus constructed is excited with an alternating current and the loop is coupled to a resonant circuit. The presence of a metallic ferromagnetic material, or a vehicle, causes the inductance of the loop to change. The change in inductance in turn causes the frequency of the resonant circuit to change which may be detected with a suitable detector.

The loop so buried in a roadway near a surveillance area is utilized essentially as an "air core" inductor. Capacitors are then coupled to the loop and included as part of an oscillator to produce a resonant circuit. Small changes in the value of the loop inductance caused by the presence of vehicles will effect a slight change in the resonant frequency. The presence or passage of a metal vehicle in proximity to the sensing loop causes the loop inductance to decrease. Small eddy currents are generated in the mass of the vehicle by transformer coupling. These eddy currents in turn create magnetic fields of their own. The polarity of the magnetic field associated with the eddy currents is at each instant opposite to that of the inductive loop. This results in a partial cancellation of the magnetic field produced by the alternating current in the inductive loop. This partial cancellation therefore causes less energy to be stored in the loop's magnetic field and therefore the inductance of the loop decreases. In a typical single six foot (1.83 meters) square, 70 microhenry loop, for example, it is typical to observe an inductance decrease of about $3\frac{1}{2}$ microhenries for automobiles, 70 nanohenries for small motorcycles, and 15 nanohenries for bicycles.

There are several problems, however, which occur due to the use of an inductive loop in a traffic roadway. The multiturn wire loop is embedded in the surface of the pavement of the lane in which surveillance is desired. The wire conductors of the loop are generally laid into a narrow slot which is saw-cut into the pavement surface. The narrow slot is then sealed with an epoxy, urethane rubber, bitumen or similar material. The sealing of the narrow slot is to prevent loop wire movement. Any translation or flexure in the loop wire can cause spurious reductions in inductance with the result of false detections of vehicles. The sealing is also necessary to block water flow to the conductors since the presence of water can also alter the effective inductance of the wire loop. Another problem of an inductive loop sensor is that it is a relatively large aperture sensing device. That is, since an approximately six foot (1.83 meters) square loop is generally used, the position resolution of the sensor cannot be less than the six foot (1.83 meters) square. This reduces a vehicle count accuracy due to the low resolution of the large sampling area. A further problem with a loop sensor is that its performance depends upon the quality of the pavement surface. Any movement of the paving surface due to fractures can cause false detections. Similarly loop sensors cannot be utilized on roadways which are unpaved or where the paving material is discontinuous, such as in cobblestones, bricks, rock or gravel. A still further disadvantage of an inductive loop sensor is that the process of sawcutting the narrow slot into which the inductive loop sensor wires are laid does considerable damage to the pavement. This results in a shortening of the pavement life and a deterioration in the surface quality of the pavement. A still further problem with inductive loop sensors is that the life of the wires utilized in the inductive loop sensors is relatively short. Frost heave, surface erosion, snowplows, chemical attack, pavement flow, all combine to damage the wires of the inductive loop sensor and may cause it to provide intermittent or continuous opens or leaks.

There are, of course, a wide variety of loops, sensors and wire configurations which may be utilized to produce a loop sensor. One example of a wire configuration which may be used as an inductive loop sensor is illustrated in United States Patent No. 3,984,764, S. J. Koerner, INDUCTIVE LOOP STRUCTURE FOR DETECTING THE PRESENCE OF VEHICLES OVER A ROADWAY, which issued on October 5, 1976.

Another means of detecting the presence of metallic ferromagnetic materials, vehicles, are magnetometers and typically flux gate magnetometers. An example of a magnetometer is described in United States Patent No. 3,249,915, R. J. Koener, METHOD AND APPARATUS FOR VEHICLE DETECTION, issued May 3, 1966, which is hereby incorporated by reference. A magnometer is a device inserted in surface of a roadway to detect changes in the flux lines of the earth's magnetic field. Normally, the earth's magnetic field produces uniformly-spaced flux lines in a given relatively small surveillance area. The presence of a ferromagnetic material, a vehicle, warps the flux lines produced by the earth's magnetic field. Since the ferromagnetic material represents a path of lower reluctance for the flux lines, the flux lines are warped with more of the flux lines passing through the cross-sectional area of the ferromagnetic material than would normally pass through the same area without the presence of the ferromagnetic material. A typical magnetometer has a primary and a secondary winding. The secondary winding is D.C. biased to provide the properly operating point in relation to the intensity and direction of the earth's magnetic field at the point on the earth's surface where the surveillance area is located. The primary winding of the magnetometer is excited with an alternating current field at a frequency F. This produces a signal on the secondary winding at a frequency 2F. The amplitude and phase of the signal present on the secondary winding of the magnetometer varies in conjunction with the presence or passage of a ferromagnetic material through the surveillance area. One example of a magnetometer of this type is described in U.S. Patent No. 3,319,161, J. C. Beynon, FLUX GATE MAGNETOMETER UTILIZING A THIN HELICAL STRIP OF MAGNETIC MATERIAL AS ITS CORE, which issued on May 9, 1967. In G.B. 647,403, Williams, there is disclosed a saturable reactor which is coupled to an amplifier so that the passage of a vehicle generates at the output of the amplifier an impulse suitable for operating a relay or the like.

The use of magnetometers has the advantage in that the package is relatively small and compact having a diameter typically of only one or two inches and a length of only five or six inches. Thus, it is not necessary to require long saw cuts in the paving material in order to produce the narrow slots to accommodate the wire conductor of an inductive loop sensor. However, magnetometers also suffer a significant disadvantage. First, it is a precision operation and very time-consuming to adjust the bias of a particular magnetometer for its proper operation in relation to the magnitude of the earth's magnetic field and the angle of incidence of the magnetic flux lines to the magnetometer at a particular surveillance location. Secondly, the flux gate magnetometer is not a simple device, requiring two primary windings and two secondary windings with an alternating current excitation of the primary winding and a D.C. bias to the secondary winding. This more complex construction necessitates the use of a four-wire cable to connect the magnetometer to a detector, while an inductive loop requires only a two-wire cable. Further, the sensitivity of magnetometers varies inversely with the number of magnetometers coupled together. Thus, if two magnetometers were coupled together, the sensitivity of each would be half of the sensitivity of each alone. The characteristics which magnetometers and inductive loops manifest are different and not compatible.

Thus, it would be highly desirable to develop a structure which has the approximate size and configuration of a magnetometer and which will work with existing loop detection equipment. Such a device would have the advantages of a relatively small aperture sensing area, the operation of the system would not depend upon the quality of the pavement surface, the device could be installed on unpaved roads, the quality and longevity of the pavement would not be reduced due to the necessity for making saw cuts and the longevity of the device would be increased because it would not be subject to flexing of the roadway over a large surface area. Such a device has the further advantage in that it can be used with well-known loop detector sensors and it could be retrofitted in existing applications. The device would not require the precise adjustment techniques required of existing magnetometers.

One example of an inductive loop detector which may be utilized in conjunction with an inductive loop to detect the presence of a ferromagnetic material is described in U.S. Patent No. 3,989,932, R. J. Koerner, INDUCTIVE LOOP VEHICLE DETECTOR which issued on November 2, 1976. In general, the inductive loop detector in the '932 patent has an oscillator circuit connected to the loop sensor for oscillating the loop at a frequency depending upon the inductance of the loop. It has a timing means for measuring the time duration of a fixed number of cycles of the oscillator circuit, and a reference determinator defining a reference duration, a comparator for determining the difference between the measured time duration and the reference duration, and a threshold determinator responsive to the difference exceeding a threshold value for generating a signal indicative of the presence of a vehicle in a specified area. Since the inductive loop detector operates by measuring changes in the frequency of oscillation of a resonant circuit, a change in inductance in the loop sensor will cause a change in the frequency of oscillation, allowing the inductive loop vehicle detector described in the '932 patent to operate.

Disclosure of Invention

The present invention relates to an apparatus for detecting a ferromagnetic material in a predetermined area. A converter is utilized having an impedance responsive to the magnetic field intensity of the earth to be utilized for converting changes in the magnetic field intensity of the earth into a change in impedance. The converter is coupled to a detector for monitoring the impedance and for generating a signal indicative of the detection of the ferromagnetic material in the predetermined area responsive to the change in the impedance. Typically, the impedance change is caused by a change in inductance.

Therefore, according to this invention there is provided an apparatus for detecting a ferromagnetic material in a predetermined area of the type having an impedance responsive to the presence of said ferromagnetic material within said predetermined area, having an oscillator operatively coupled to said impedance for oscillating at a frequency dependent upon said impedance and having a detector operatively coupled to said oscillator for detecting changes in said frequency, the apparatus being characterized by said impedance being responsive to the magnetic field intensity of the earth for converting a change in said magnetic field intensity into a change in said impedance.

The impedance may have an open magnetic structure having a BH curve with a non-linear portion biased by the magnetic field intensity of the earth near the non-linear portion of the BH curve. Further, the open magnetic structure may have a core having an axis at least partially aligned with the magnetic flux lines of the earth's magnetic field consisting essentially of a highly permeable material saturable under the influence of the earth's magnetic field and a coil having a conductor wound in at least one turn around the axis of the core. Typically, the axis of the open magnetic structure is substantially vertical, but may be utilized in any position where the axis is not completely orthogonal to the magnetic flux lines of the earth's magnetic field. The core of the open magnetic structure typically has a length along the axis which is much larger than its thickness. Typically, the length is 1500 times its thickness. Under such circumstances, the core approaches saturation flux density under the influence of the earth's magnetic field.

The core may be constructed from a strip of material wound on the inside of a non-magnetic tube. The strip may have a thickness of about one mil ($2.54 \times 10^{-3}$ cm) and a width of about 62 mils wound into a helix forming a wound length of approximately $1\frac{1}{2}$ inches (3.81 mm). The material forming the strip may be constructed from an iron nickel alloy and typically from an iron nickel molybdenum alloy which is approximately 80% nickel. An example of a material which may be utilized is 4—79 molybdenum permalloy.

The apparatus may be particularly utilized where the ferromagnetic material is a vehicle and the surveillance area is a portion of a roadway. The apparatus may be utilized in vertical juxtaposition to the surveillance area in which case a decrease in inductance will signal the arrival of a vehicle to the surveillance area. Or, the apparatus may be utilized in conjunction with a roadway which has a pair of lanes, each having a surveillance area with the apparatus positioned between the pair of lanes. In this instance, an increase in inductance would signal the presence or arrival of a vehicle in one of the surveillance areas, or conversely a decrease in inductance would signal the departure of a vehicle from the surveillance areas.

The apparatus is typically configured to be located below the surface of a roadway at or near the traffic lane containing the surveillance area. Since a small magnetometer size probe is utilized, the typical disadvantages of an inductive detector related to, e.g., large aperture, quality of pavement surface, discontinuous paving material, necessity to use saw cuts, flexure of the pavement surface, and the opportunity for moisture to enter the roadway surface are eliminated. At the same time, the apparatus produces a change in inductance of the same type and magnitude as that produced by inductive loop sensors and may be utilized with existing loop detectors.

Detailed Description

The foregoing advantages, construction and operation of the present invention will become more readily apparent from the following description and accompanying drawings, in which:

Figure 1 is a top view of a prior art inductive loop sensor;

Figure 2 is a top view of an apparatus of the present invention coupled to a loop detector;

Figure 3 is a side view of an impedance used in the present invention located in a roadway;

Figure 4 is a side view of the earth's undisturbed magnetic flux lines;

Figure 5 is a top sectional view of the earth's undisturbed magnetic flux lines;

Figure 6 is a side view of the earth's magnetic flux lines with a ferromagnetic object present;

Figure 7 is a top view of the earth's magnetic flux lines with a ferromagnetic material present;

Figure 8 is a BH curve illustrating the magnetic characteristics of an impedance used in the present invention;

Figure 9 is a BH curve with AC excitation;

Figure 10 is a square BH curve;

Figure 11 is a block diagram of an inductive oscillator circuit;

Figure 12 is a diagram illustrating the structure of the impedance used in the present invention;

Figure 13 illustrates how a thin strip of material may be helically wound on the inside of the non-magnetic tube;

Figure 14 illustrates a multi-lane configuration with the sensors located at the center of each lane to be detected;

Figure 15 illustrates a multi-lane configuration with the sensors located between the lanes to be detected;

Figure 16 illustrates a side view of a dual lane detector with no vehicle present;

Figure 17 illustrates a side view of a dual lane detector with a vehicle present in one lane.

Detailed Description

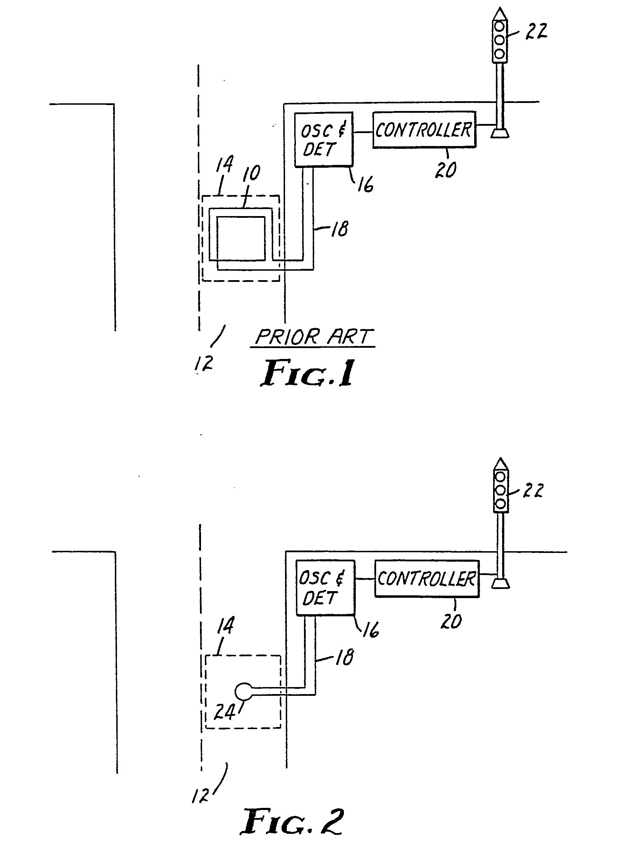

Figure 1 illustrates a typical prior art installation of an inductive loop 10 buried in a roadway 12 below a surveillance area 14. The loop is connected to an oscillator and detector 16 with wires 18. The presence of a vehicle over the surveillance area 14 causes a decrease in inductance of the inductive loop 10 which is transmitted along wires 18 to the oscillator and detector 16. If the magnitude of the decrease in inductance is greater than a predetermined or adapted threshold, the oscillator and detector 16 will send a call signal to a controller 20. The controller 20 then operates in its normal fashion to control a traffic signal 22 at the intersection.

While Figure 1 illustrates one inductive loop 10 utilized in one surveillance area 14 coupled to one oscillator and detector 16, it is to be understood that typical applications could involve the use of a plurality of inductive loops 10 per surveillance area 14 and the use of a plurality of surveillance areas 14 with at least one inductive loop 10 detecting each surveillance area 14. Similarly, the intersection being controlled may have a plurality of traffic signals 22.

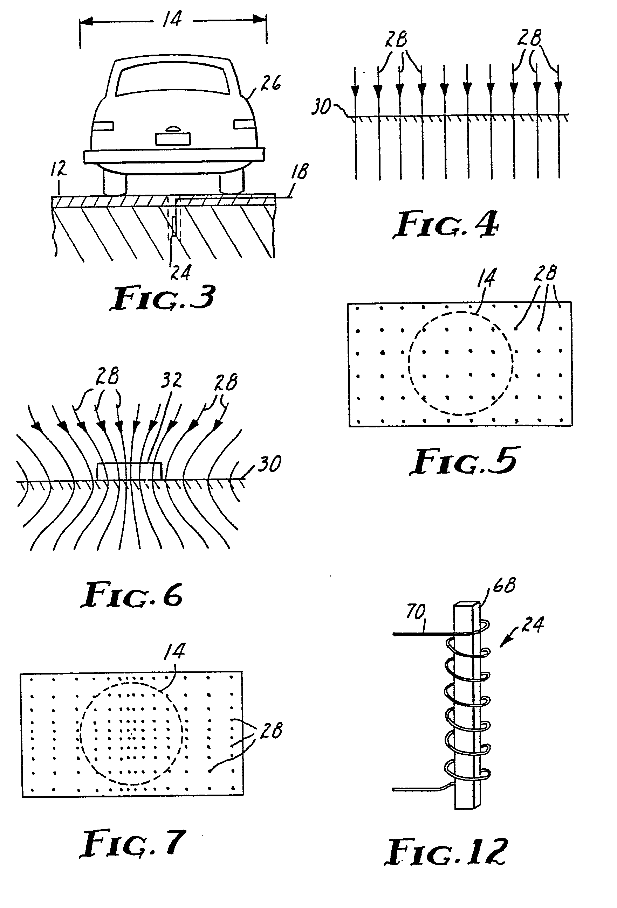

Figure 2 illustrates the microloop 24 used as the impedance in the present invention buried in a roadway 12 within the surveillance area 14. The microloop 24 is connected to the oscillator and detector 16 with wires 18 as in Figure 1. Also as in Figure 1, a call signal is issued to a controller 20 which in turn operates the traffic signal 22 in response to vehicular traffic in the surveillance area 14.

Figure 3 illustrates the placement of the microloop 24 with respect to a roadway 12. A vehicle 26 is illustrated in the center of the surveillance area 14 with the microloop 24 buried in the roadway 12 in a hole bored for that purpose. The wires 18 connecting the microloop 24 to the oscillator and detector 16 (not shown) are illustrated as being saw cut into the surface of the roadway 12. The microloop 24 will operate to transform changes in the magnetic field intensity of the earth into a change in impedance and, in a preferred embodiment, to a change in inductance. In order to facilitate an understanding of this change, it is necessary to illustrate the magnetic flux lines which comprise the earth's magnetic field and how these magnetic flux lines are modified when a ferromagnetic material comes within the influence of the magnetic flux lines.

Figure 4 illustrates a side view of the earth's magnetic flux lines 28 as they intercept the earth's surface 30. The earth's surface 30 may, of course, be represented by the surface of a roadway 12, as illustrated in Figures 1 through 3. With no ferromagnetic material present in the diagram illustrated in Figure 4, the magnetic flux lines 28 are uniformly spaced and, over this small cross-section, are substantially parallel. The magnetic flux lines 28 as illustrated in Figure 4 have been depicted to be substantially normal to the earth's surface 30. Under actual operating conditions, the magnetic flux lines 28 may not actually maintain this normal orientation. Depending upon the location on the earth's surface and its relation to the magnetic equator and the magnetic poles, the angle at which the magnetic flux lines 28 pierce the earth's surface may vary from nearly orthogonal to nearly parallel (at the magnetic equator). For purposes of illustration, the orthogonal arrangement depicted in Figure 4 will suffice. In an actual installation, it is necessary only that the microloop 24 have its long axis oriented at least partially in line with the magnetic flux lines at that point on the earth's surface. For example, if the microloop 24 were installed normal to the surface of the earth 30, the microloop would work at all locations on the earth's surface, except those locations very near the magnetic equator. Of course, the maximum sensitivity will be obtained when the long axis of the microloop 24 is oriented exactly with the direction of the magnetic flux lines 28 at the particular location where it is operating. A somewhat degraded operation, however, but still functional, may be obtained when the angle between the long axis of the microloop 24 and the magnetic flux lines 28 is less than 90 degrees.

Figure 5 illustrates a top view of the magnetic flux lines 28 previously illustrated in Figure 4. Shown as dots piercing the earth's surface 30, the magnetic flux lines are equally spaced and uniform over the entire area depicted and within the surveillance area 14 approximately sixteen (16) magnetic flux lines are shown to intercept the surveillance area 14.

Figure 6 represents a corresponding diagram to that represented in Figure 4, but with a ferromagnetic material 32 within the surveillance area 14. Again, the magnetic flux lines 28 are shown piercing the earth's surface 30. The magnetic flux lines, however, instead of being uniformly distributed and being substantially parallel to each other, have taken a distorted shape. Because the ferromagnetic material 32 represents a path of lower reluctance for the magnetic flux lines 28, the magnetic flux lines 28 are drawn to it and are drawn to pass through it rather than to take their usual uniformly distributed paths. As can be seen in Figure 6, this causes a gathering or a bunching of the magnetic flux lines 28 to the area where the ferromagnetic material 32 is positioned.

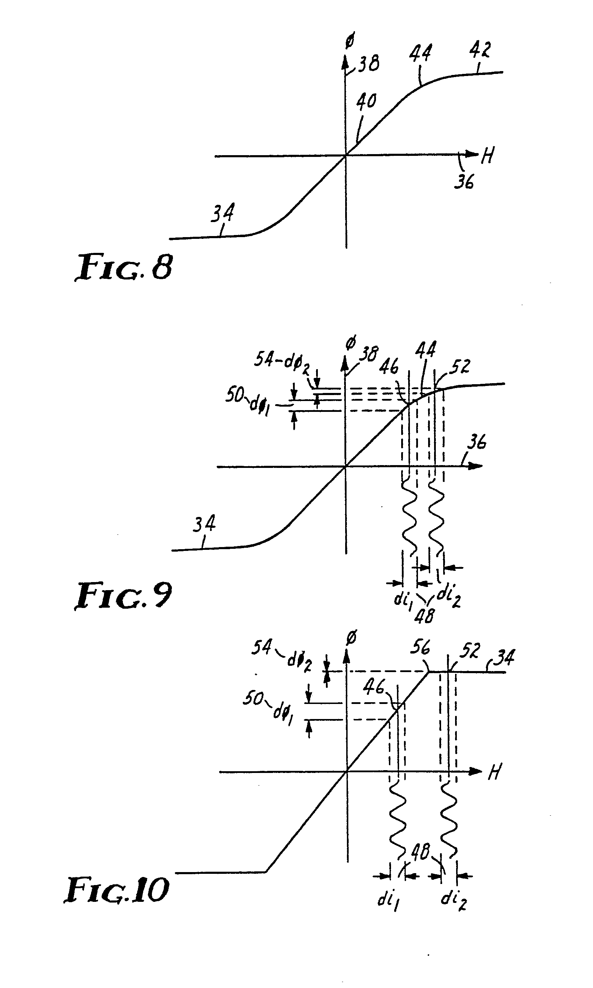

Figure 7 is a view similar to that of Figure 5 showing the effect of the number of flux lines piercing the surveillance area 14 illustrated in Figure 5. Again, the magnetic flux lines 28 are shown as dots piercing the earth's surface. Because the ferromagnetic material 32 of Figure 6 has caused a gathering or a bunching of the magnetic flux lines 28, to its proximity, it can be seen in Figure 7 that a greater number of magnetic flux lines 28 are contained within the surveillance area 14 and that in particular approximately sixty (60) magnetic flux lines are shown to intercept surveillance area 14. This change in the number of the magnetic flux lines 28 intercepting the surveillance area 14 represents an increase in the magnetic field intensity within the surveillance area 14.

Figure 8 illustrates a BH curve 34 for a hypothetical ferromagnetic material without hysteresis. The H axis represents the magnetic field intensity 36 and the B axis represents magnetic flux density 38. As is typical for ferromagnetic material, the BH curve is not linear. The curve has a particular slope as it passes through, or near, the zero point on the BH curve but as the magnetic field intensity increases, the material approaches saturation, the slope decreases and the curve becomes asymptotic to the saturation magnetic flux density of the ferromagnetic material. Assuming forward magnetic field intensity 36 bias, the point at which the curve 34 is most non-linear between its portion of slope 40 to its asymptote 42 is called the saturation knee 44 of the curve 34.

Figure 9 illustrates the same BH Curve 34. Again, the horizontal axis is magnetic field intensity 36 and the vertical axis is magnetic flux density 38. Assume that a ferromagnetic material is placed within the influence of the earth's magnetic field, and that the saturation knee 44 of the BH curve 34 occurs at approximately the magnetic field intensity of the component of the earth's magnetic field, which is aligned with the long axis of the ferromagnetic material. Assume that the component of the earth's magnetic field, which is influencing the ferromagnetic device biases the BH curve 34 to point 46 near the saturation knee 44. Also assume that a coil of wire is wound on the ferromagnetic material and that an alternating current is induced therein. This alternating current will produce a varying magnetic field intensity 48 superimposed upon the magnetic field intensity of the earth. The magnetic field intensity will oscillate around point 46 and due to the slope of the BH curve 34 at that point, will cause a varying magnetic flux density 50 as illustrated in Figure 9. Now assume that a substantial ferromagnetic material such as a motor vehicle passes over the coil wound ferromagnetic material represented by BH curve 34 causing an increase in the magnetic flux lines 28 of the earth's magnetic field as illustrated in Figure 7 which cause the biasing of BH curve 34 due to the earth's magnetic field to increase to a higher magnetic field intensity 36 to point 52 along BH curve 34. Since the same A.C. current is still present in the coil of wire, the same varying magnetic field intensity 48 is again shown. Now, however, since the increase in the earth's magnetic field intensity has caused us to move from point 46 on the BH curve 34 to point 52 on the BH curve 34, the same varying magnetic field intensity 48 due to the alternating current produces a much smaller varying magnetic flux density 54 due to the decrease in the slope of the BH curve 34.

Since the time varying magnetic flux density 54, $d\phi_2$ is substantially less than the varying magnetic flux density 50, $d\phi_1$, for the same time varying magnetic field intensity 48, represented by the same time varying current supplied to the coil of wire di, the result is an effective decrease in inductance, $d\phi_2/di < d\phi_1/di$, as seen from the terminals to the coil of wire.

Figure 10 illustrates that it is not necessary to have a ferromagnetic material with a BH curve 34 exactly like the one depicted in Figure 9. In fact, a ferromagnetic material with a BH curve which has at least one non-linear segment, is all that is necessary. It is not necessary that the BH curve 34 be continuously non-linear nor that the nonlinearity occur over a given range. It is necessary, however, that the material be capable to being biased by the component of the earth's magnetic field which affects it at or near the point of nonlinearity 56 so that the change in the earth's magnetic field intensity due to the presence of the external ferromagnetic material, a motor vehicle, moves the material along the BH curve 34 from point 46 toward point 52, into or through the nonlinearity 56. In this way, the same time varying magnetic field intensity 48 causes a smaller time varying magnetic flux density 54 with the motor vehicle present than the time varying magnetic flux density 50 without the vehicle present.

Figure 11 shows a surveillance area 14 containing the microloop 24 consisting of the ferromagnetic material described in Figures 8, 9, and 10 wound with a suitable wire. The microloop 24 is connected through a transformer 57 to an external capacitor 58 which is in turn coupled to an oscillator 60 and a detector 62. The microloop 24 and the external capacitor 58 when driven with the oscillator 60 comprise a resonant circuit whose resonant frequency is dependent upon both the inductance of the microloop 24 and the external capacitor 58. The transformer 57 is utilized to block any DC current which may be introduced by the oscillator 60. It will be recognized that other oscillator circuits may be constructed to sense the inductance or impedance change of the microloop 24. These oscillator circuits may or may not contain an external capacitor 58 and may contain the external capacitor 58 coupled in a different manner. Please note that the external capacitor 58 along with the oscillator 60 and detector 62 are exactly those components comprising the oscillator and detector 16 described in Figure 1 and Figure 2. The oscillator and detector 16 in Figure 1 depends upon the changes in inductance of the inductive loop 10. Since the microloop 24 changes its inductance in response to a variation in the earth's magnetic field intensity and therefore due to the presence of a ferromagnetic material, such as a motor vehicle, over it or near it, the capacitor 58, oscillator 60 and detector 62 represent exactly the sáme components as may be utilized for the oscillator and detector 16 in Figure 1. An example of an oscillator and detector 16 which may be utilized in conjunction with the present microloop is described in the '932 Koerner patent. Thus it can be seen that the microloop 24 constructed and operating as described may be coupled to the same oscillator and detector 16 as is utilized for existing inductive loop operations, but that it operates upon entirely different principles and is an entirely different structure as will be subsequently seen.

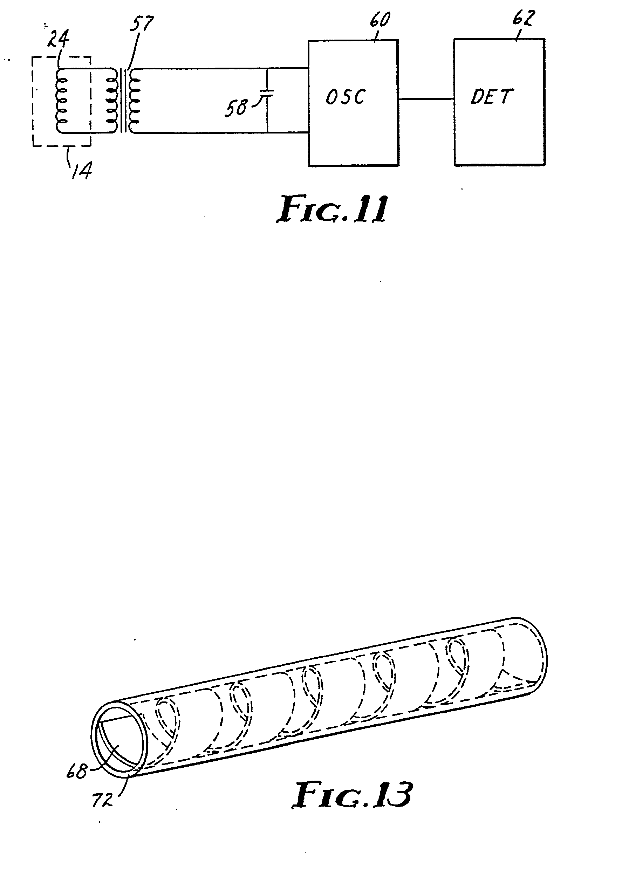

Of course, there may be other devices and materials other than the microloop 24 which perform the same transformation of changes in the magnetic field intensity of the earth into a change of inductance. As an example, a magnetoresistor may be coupled in conjunction with an inductor to perform a similar transformation. The effective inductance as seen by an oscillator is modified due to a change in the resistance of the magnetoresistor, even though the inductor remains constant. Since the magnetoresistor will have a varying resistance, depending upon the magnetic field intensity to which it is subjected, the same modified resonant frequency is obtained this time with a resistive varying structure. The basic structure of the microloop 24 is illustrated in Figure 12. The microloop 24 consists of a strip of magnetic material 68 having a coil 70 wound around it. The strip of magnetic material 68 is shown having a substantially elongated shape, i.e. having a length which is substantially greater than its cross-sectional area. In a preferred embodiment, the magnetic material 68 utilized is an iron nickel alloy and in still another preferred embodiment, the particular iron nickel alloy utilized contains approximately 80% nickel. A permalloy is a preferred embodiment of magnetic material 68 having these characteristics. In particular, it has been found that 4—79 molybdenum permalloy available from Magnetics, Inc., 1620 Potrero, South ElMonte, California, is particularly suitable. In one preferred embodiment the strip of magnetic material 68 is a thin strip approximately 1/16th inch (0.16 centimeters) wide and approximately 1/1000th of an inch (0.254 millimeters) thick. Typically, the strip may be $1\frac{1}{2}$ inches (3.81 centimeters) long. The material 68 is then wound with coil 70 in one embodiment approximately 35 turns of No. 28 copper wire. Since the thin strip of magnetic material 68 may be constructed from a strip of permally approximately 1 mil (0.0254 millimeters) thick, it may be desired to utilize a non-magnetic structure to form the resulting strip. In a preferred embodiment, the 1 mil (0.0254 millimeters) thick, 1/16th inch (0.16 centimeters) wide permally material is wound in a helix on the inside of a non-magnetic tube having an approximate inside diameter of 0.039 inches (0.099 centimeters). The coil 70 of wire may then be wound around the outside of the non-magnetic tube. This is illustrated in Figure 13 which shows the magnetic material 68 being wound in a helix on the inside of tube 72. In one preferred embodiment, the non-magnetic tube 72 is constructed from ceramic material. An example of such a helical winding of a thin strip of permalloy material is illustrated in the Beynon patent. The resulting microloop structure typically results in an approximate inductance of five (5) microhenries. The resulting structure in Figure 13 may then be encapsulated in an inert material to facilitate handling and to preserve its structure as it is buried in the surface of a roadway 12 to monitor a surveillance area 14.

In a preferred embodiment the resulting microloop 24 is connected with a detector normally utilized for inductive loops. Since it is typical for the least inductance of inductive loops to be about 18—20 microhenries, it is desired that the microloop 24 be in the same range. This may easily be accomplished by adding an additional inductance of about 13—15 microhenries in series with the microloop 24 to bring the effective inductance within the desired range.

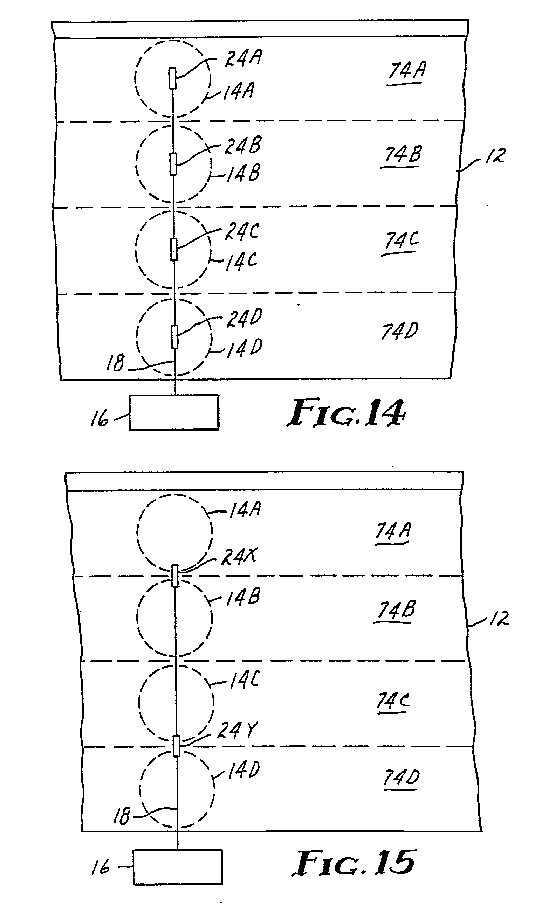

Use of the microloop 24 in a traffic situation may be illustrated in Figure 14. Here four surveillance areas 14A, 14B, 14C, and 14D are shown, each for vehicle lane 74A, 74B, 74C, and 74D respectively all contained within a roadway 12. In the installation in Figure 14, a separate microloop 24 is illustrated as contained within each surveillance area 14, thus as illustrated, microloop 24A is contained in surveillance area 14A, microloop 24B is contained within surveillance area 14B, etc. The microloops 24A, 24B, 24C, and 24D are then coupled together with wires 18 and are coupled to the oscillator and detector 16. Constructed in this manner, a motor vehicle driving in lane 74A will pass through surveillance area 14A which will cause microloop 24A to exhibit a decreased inductance. The oscillator and detector 16 will then sense that decreased inductance and properly produce an output. Similar results will be obtained for each of the other lanes.

An alternative arrangement is illustrated in Figure 15. Again, lanes 74A, 74B, 74C and 74D are illustrated within roadway 12. Still again, surveillance area 14A, 14B, 14C, and 14D are shown illustrated within each of the respective lanes 74A, 74B, 74C, and 74D. However, in this arrangement, instead of placing a separate microloop 24 within each of these surveillance areas 14, a "between-the-lanes" approach is utilized. A microloop 24X is shown located between surveillance area 14A and surveillance area 14B and a microloop 24Y is shown located between surveillance area 14C and surveillance area 14D. A motor vehicle travelling in line 74A will pass through surveillance area 14A which will cause an increase in magnetic flux density within surveillance area 14A and because those magnetic flux lines have been borrowed from the surrounding area will cause a decrease in magnetic flux lines and hence a decrease in magnetic field intensity at the location of microloop 24X. A decrease in the magnetic field intensity at the location of microloop 24X will cause an increase in the effective inductance of microloop 24X. Microloop 24X and 24Y are connected again along lines 18 to an oscillator and detector 16. The oscillator and detector 16 in this configuration may be constructed to sense an increase in inductance indicating that a motor vehicle has arrived in one of the surveillance areas 14 or the oscillator and detector 16 may be exactly the same as that is in Figure 15 detecting the departure of a motor vehicle from surveillance area 14A. Similar results are obtained with microloop 24X when a vehicle enters surveillance area 14B and still similarly similar results are obtained for microloop 24Y with respect to surveillance areas 14C and 14D.

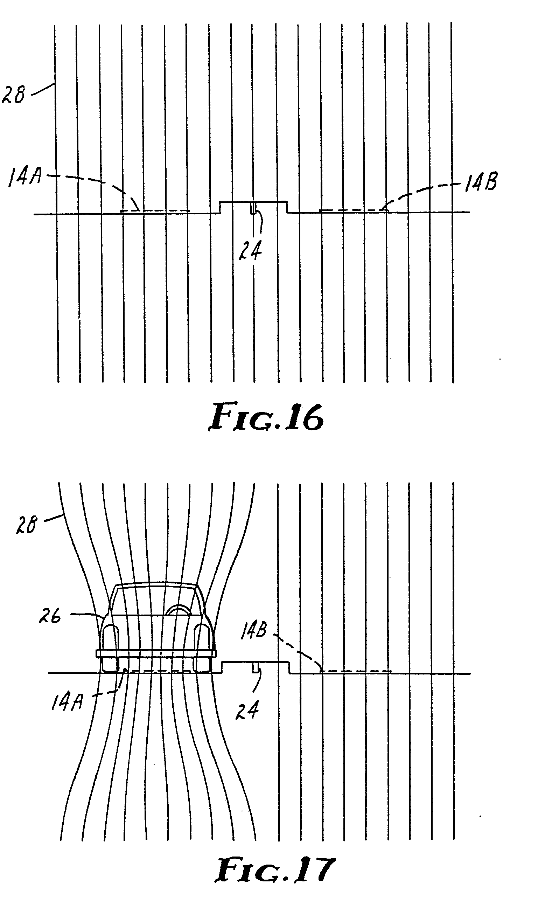

Figure 16 and Figure 17 further illustrate the "between-the-lanes" approach of Figure 15. In Figure 16, the magnetic flux lines 28 are shown uniformly distributed with a microloop 24 disposed between surveillance area 14A and surveillance area 14B. Figure 17 illustrates the effect on the magnetic flux lines 28 when a vehicle 26 enters surveillance area 14A. Due to the lower reluctance path represented by the ferromagnetic mass of vehicle 26, a greater number of the magnetic flux lines 28 pass through the vehicle 26 and hence a greater number of magnetic flux lines are contained within surveillance area 14A. However, since the number of magnetic flux lines at a given point on the earth's surface is constant, those magnetic flux lines passing through surveillance area 14A must be "borrowed" from the adjacent areas. Thus, as illustrated in Figure 17, the location of microloop 24 contains fewer magnetic flux lines 28, resulting in a decrease in magnetic field intensity which would result in an increase in effective inductance.

Thus, it can be seen that there has been shown and described a novel apparatus for detecting a ferromagnetic material in a predetermined area. It is to be understood, however, that various changes, modifications, substitutions in the form of the details of the described apparatus can be made by those skilled in the art without departing from the scope of the invention as defined by the following claims.

**Claims**

1. An apparatus (16, 24) for detecting a ferromagnetic material (32) in a predetermined area (14) of the type having an impedance (24) responsive to the presence of said ferromagnetic material (32) within said predetermined area (14), having an oscillator (60) operatively coupled to said impedance (24) for oscillating at a frequency dependent upon said impedance (24) and having a detector (62) operatively coupled to said oscillator (60) for detecting changes in said frequency, the apparatus (16, 24) being characterized by said impedance (24) being responsive to the magnetic field intensity (28) of the earth for converting a change in said magnetic field intensity (28) into a change in said impedance (24).

2. An apparatus as in claim 1, characterized by said impedance (24) having an open magnetic structure having a B—H curve (34) with a non-linear portion (44) biased by said magnetic field intensity (28) near said non-linear portion (44) of said B—H curve (34).

3. An apparatus (16, 24) as in claim 2, characterized by said open magnetic structure having a core (68) having an axis at least partially aligned with the magnetic flux lines of the earth's magnetic field (28) consisting essentially of a highly permeable material saturable under the influence of said magnetic field intensity (28) and having a coil (70) surrounding said axis of said core (68) coupled to said oscillator (60).

4. An apparatus (16, 24) as in claim 3 characterized by said core having a length along said axis and having a thickness, said length being much larger than said thickness.

5. An apparatus (16, 24) according to claim 4, characterized by said length being at least one hundred times greater than said thickness.

**Revendications**

1. Appareil (16, 24) pour détecter une matière ferromagnétique (32) dans une zone prédéterminée (14), du type comportant une impédance (24) sensible à la présence de la dite matière ferromagnétique (32) dans la dite zone prédéterminée (14), comportant un oscillateur (60) relié fonctionnellement à la dite impédance (24) de manière à osciller à une fréquence qui dépend de la dite impédance (24), et comportant un détecteur (62) relié fonctionnellement audit oscillateur (60) de manière à détecter des variations de la dite fréquence, l'appareil (16, 24) étant caractérisé en ce que l'impédance (24) est sensible à l'intensité (28) du champ magnétique terrestre, de manière à transformer une variation de la dite intensité (28) du champ magnétique en une variation de la dite impédance (24).

2. Appareil suivant la revendication 1, caractérisé en ce que l'impédance (24) présente une structure magnétique ouverte ayant une courbe champ-flux (34) qui comporte une partie non linéaire (44), le point correspondant à la dite intensité de champ magnétique (28) étant situé près de la dite partie non linéaire (44) de la dite courbe (34).

3. Appareil (26, 24) suivant la revendication 2, caractérisé en ce que la structure magnétique ouverte comprend un noyau (68), ayant un axe au moins partiellement aligné avec les lignes de flux magnétique du champ magnétique terrestre (28) et constitué essentiellement d'une matière très perméable et saturable sous l'influence de la dite intensité de champ magnétique (28) et un enroulement (70) entourant le dit axe dudit noyau (68) et relié à l'oscillateur (60).

4. Appareil (16, 24) suivant la revendication 3, caractérisé en ce que le noyau présente une longueur définie, le long dudit axe, et une épaisseur, la dite longueur étant beaucoup plus grande que la dite épaisseur.

5. Appareil (16, 24) suivant la revendication 4, caractérisé en ce que la longueur est au moins cent fois plus grande que l'épaisseur.

**Patentansprüche**

1. Vorrichtung (16, 24) zum Erkennen von ferromagnetischem Material (32) in einem vorherbestimmten Bereich (14), mit einer Impedanz (24), die auf das Vorhandensein des ferromagnetischen Materials (32) in dem vorherbestimmten Bereich (14) anspricht, mit einem Oszillator (60), der mit der Impedanz (60) in Wirkungsverbindung steht und mit einer von dem Wert der Impedanz (24) abhängigen Frequenz schwingt, und mit einem Detektor (62), der mit einem Oszillator (60) in Wirkungsverbindung steht und Veränderungen der genannten Frequenz erkennt, dadurch gekennzeichnet, daß die Impedanz (24) auf die Feldstärke (28) des erdmagnetischen Feldes anspricht und eine Veränderung dieser magnetischen Feldstärke (28) in eine Veränderung des Wertes der genannten Impedanz (24) umsetzt.

2. Vorrichtung nach Anspruch 1, dadurch gekennzeichnet, daß die Impedanz (24) einen offenen magnetischen Kreis umfaßt, dessen B—H—Kurve (34) einen nichtlinearen Teil (44) besitzt und der durch die genannte magnetische Feldstärke (28) in der Nähe des nichtlinearen Teils (44) der B—H—Kurve (34) vormagnetisiert ist.

3. Vorrichtung (16, 24) nach Anspruch 2, dadurch gekennzeichnet, daß der offene magnetische Kreis einen Kern (68) besitzt, dessen Achse mindestens teilweise mit den Feldlinien des erdmagnetischen Feldes (28) fluchtet und der im wesentlichen aus einem Material besteht, das eine hohe Permeabilität besitzt und unter der Einwirkung der genannten magnetischen Feldstärke (28) sättigbar ist, sowie eine die Achse des Kerns (68) umgebende Spule (70), die mit dem Oszillator (60) gekoppelt ist.

4. Vorrichtung (16, 24) nach Anspruch 3, dadurch gekennzeichnet, daß sich der Kern längs der genannten Achse erstreckt und seine Länge viel größer ist als seine Dicke.

5. Vorrichtung (16, 24) nach Anspruch 4, dadurch gekennzeichnet, daß die Länge des Kerns mindestens um das Hundertfache größer ist als seine Dicke.

22

OSC &
DET

CONTROLLER

20

14  10

16

18

/

12

*PRIOR ART*

**FIG. 1**

22

OSC &
DET

CONTROLLER

20

14

16

18

24

12

**FIG. 2**

FIG.3

FIG.4

FIG.5

FIG.6

FIG.7

FIG.12

FIG. 8

FIG. 9

FIG. 10

FIG.11

FIG.13

*FIG.14*

*FIG.15*

**FIG.16**

**FIG.17**